# EUROPEAN PATENT APPLICATION

(11) **EP 4 751 965 A1**
(43) Date of publication of application: **03.06.2026**
(21) Application number: 25217694.6
(22) Date of filing: 21.11.2025
(51) Int. Cl.: B60K 35/10

(54) **VEHICLE STEERING WHEEL**

(30) Priority: 29.11.2024 ES 202430992
(71) Applicant: Seat, S.A., 08760 Martorell (ES)
(72) Inventor: Rodriguez Bosch, Ruben, 08760 Martorell (ES); Solanes Valverde, Josep Maria, 08760 Martorell (ES); Fernandez Abad, Jose Luis, 08760 Martorell (ES); Quintana Jover, Joan, 08760 Martorell (ES)
(74) Representative: Elzaburu S.L.P.

(57) **Abstract**

This is a vehicle steering wheel comprising a torsion bar (400) set up for gripping the steering wheel by the driver of a vehicle, wherein the steering wheel comprises at least one spoke (100) connecting the torsion bar (400) with a central area (200) set up to connect the steering wheel to a steering column of the vehicle, wherein the steering wheel comprises at least one extension (300) directly connected to the central area (200) and projected toward the torsion bar (400), wherein said at least one extension (300) is positioned in correspondence with a rear portion of the steering wheel, such that when the steering wheel is oriented in a straight-ahead driving position, the at least one extension (300) is directed toward the driver's seat of the vehicle, and wherein the at least one extension (300) comprises at least one actuator (301, 302) set up to control at least one specific functionality of the vehicle.

## Description

### OBJECT OF THE INVENTION

This invention refers to a vehicle steering wheel that allows improved access to certain vehicle functions for the driver.

The vehicle steering wheel, which is the object of this invention, comprises actuators that allow easy access to certain vehicle functions in a comfortable way for the driver, without requiring the driver to take their eyes off the road on which the vehicle is traveling or move their hands from the optimal steering wheel grip position, thus contributing to improved driving safety.

The vehicle steering wheel, which is the object of this invention, applies to the field of design, manufacturing and marketing of vehicles, especially motor vehicles.

### BACKGROUND OF THE INVENTION AND TECHNICAL PROBLEM TO BE SOLVED

Nowadays, there are motor vehicles equipped with steering wheels with actuators built into them corresponding to the steering wheel spokes. These actuators allow the vehicle driver to access certain vehicle functionalities (such as sound control, speed limiter, etc.) without having to look at the vehicle's main instrument panel.

However, these steering wheels do not completely remove the need for the driver, when controlling such actuators, to look away from the road in order to reach the actuator they wish to operate, activate, deactivate, or set up the desired functionality. They also do not fully remove the need for the driver to release their grip on the steering wheel or change their grip position from the optimal position in order to reach and operate the actuator they wish to control.

Steering wheels are known in order to further improve accessibility to these actuators, such as the one disclosed in document DE 10339422 A1, which comprises extensions projecting from each of the spokes of the steering wheel, said extensions comprising actuators that allow the driver to set up certain vehicle functionalities. The driver may control the actuators without having to move their hands too far from the torsion bar of the steering wheel by means of these extensions.

However, it is noted that even with the solution disclosed in the document quoted in the previous paragraph, the driver still frequently needs to look away from the road or move their hands from the optimal grip position on the torsion bar in order to operate the actuators provided on the aforementioned extensions.

### DESCRIPTION OF THE INVENTION

This invention refer to a vehicle steering wheel in order to overcome the aforementioned drawbacks.

The vehicle steering wheel, which is the object of this invention, comprises a torsion bar (or grip bar) set up for the driver of a vehicle to hold the steering wheel.

The torsion bar may have flattened or straight sections, for example, in the lower area of the steering wheel, according to a straight-driving arrangement.

The steering wheel comprises at least one spoke (typically, at least two spokes arranged symmetrically regarding a plane of vertical symmetry) connecting the torsion bar with a central area. This central area is located in correspondence with a steering wheel rotating shaft. This central area may be set up to connect the steering wheel to a steering column (or bar) of the vehicle in the case of a mechanical steering system, in which the column physically connects the steering wheel with the arms or drive shafts coupled to the wheels. Conversely, it may be an electronic steering system (steering-by-wire), in which at least one electric engine actuates on the arms or drive shafts coupled to the wheels according to the rotational angle of the steering wheel.

The steering wheel comprises at least one actuator set up to control at least one specific functionality of the vehicle, such as the driving mode, the speed control system, the sound system volume, etc.

In a novel way, the vehicle steering wheel, which is the object of this invention, comprises at least one extension directly connected to the central area of the steering wheel. Therefore, said at least one extension moves together with the central area of the steering wheel.

The at least one extension projects from a front portion of said central area of the steering wheel toward the torsion bar and the driver's seat of the vehicle. The term "front" is understood as being in the direction and sense of the vehicle's forward movement.

The at least one actuator is arranged at a first end of the extension opposite the end connected to the central area of the steering wheel, such that the at least one actuator may be operated by a thumb movement while the driver maintains the grip on the steering wheel by the torsion bar.

By means of the aforementioned vehicle steering wheel, the driver is able to control certain vehicle functionalities by operating the at least one actuator located on the at least one extension, without needing to look at the steering wheel, since it is not necessary for the driver to release their grip on the steering wheel to locate where to place their hand.

Indeed, by means of the aforementioned vehicle steering wheel, thanks to the arrangement of the at least one extension provided with the at least one actuator, the driver may, with a simple thumb movement and without releasing the grip on the steering wheel or looking at it, control the at least one actuator located close to the torsion bar, thus setting up the pertinent vehicle functionality. In particular, the at least one extension allows the actuator to be positioned in an area accessible by the occupant's thumb while the driver holds the steering wheel in its optimal grip areas. Said optimal grip position is understood as the position with the hands on the steering wheel at 10:10 or 9:15, referring to the clockwise direction.

According to a possible invention embodiment, the at least one extension is arranged such that its first end is located near the plane defined by the surface of the torsion bar closest to the driver's seat.

According to a possible embodiment, the first end is located at a distance of between 30 and 10 mm from the plane defined by the surface of the torsion bar closest to the driver's seat. Preferably, this distance is 20 mm.

According to a possible embodiment of the vehicle steering wheel, which is the object of this invention, the at least one extension is arranged such that its first end contacts the plane defined by the surface of the torsion bar closest to the driver's seat. Thus, the first end of the at least one extension reaches the rear plane of the steering wheel itself, without exceeding said plane.

In this way, there are no elements of the steering wheel project beyond said plane, thus preventing the actuators provided at the first end of the at least one extension from being unintentionally operated by the driver of the vehicle.

According to a possible embodiment of the vehicle steering wheel, which is the object of this invention, the first end of the at least one extension comprises an actuation surface angled in relation to the plane defined by the rear surface of the torsion bar and oriented toward the outside of the steering wheel. This actuation surface is preferably oriented toward the area of the torsion bar closest to the pertinent extension.

This improves the ergonomics of the steering wheel, allowing the driver, with a simple thumb movement toward said actuation surface, to control an actuator in order to set up a specific vehicle functionality.

According to a preferred embodiment, a shaft perpendicular to the actuation surface is angled between 15° and 45° (preferably, 30°) regarding a shaft perpendicular to the plane defined by the rear surface of the torsion bar. As mentioned, this orientation is toward the outside of the steering wheel and, therefore, opposite to an orientation toward the central area.

According to a possible embodiment, the at least one extension comprises a geometry in the form of a circular cylinder. This geometry may be a straight cylinder, or it may alternatively comprise a cross-section that increases or decreases from the first end to the second end. Preferably, it decreases from the second end, or the end near the central area, to the first end, or the end comprising the actuation surface.

Preferably, the at least one extension is arranged below the central area.

According to a possible invention embodiment, the at least one extension comprises at least a first actuator in the form of a button, operable in a direction substantially perpendicular to the projection direction of the "at least one extension."

Also, according to a possible invention embodiment, the at least one extension comprises at least a second actuator in the form of a peripheral wheel, operable by rotation according to a rotating shaft parallel to the projection direction of the "at least one extension."

Preferably, the vehicle steering wheel, which is the object of this invention, comprises at least two extensions, in which a first extension projects from the front portion of the central area of the steering wheel toward the rear left area of the steering wheel, and a second extension projects from the front portion of the central area toward the rear right area of the steering wheel. Said first and second extensions are arranged symmetrically regarding a plane defined according to the vertical and forward directions of the vehicle.

In the case mentioned in the previous paragraph, the actuation surface of the first extension may be angled in a direction opposite to that of the actuation surface of the second extension.

### BRIEF DESCRIPTION OF THE FIGURES

As part of the explanation of at least one invention embodiment, the following figures have been included.
Figure 1: It shows a perspective view of the interior cabin of a vehicle, in which a steering wheel may be seen, according to a possible invention embodiment.
Figure 2: It shows a schematic front view of the steering wheel of Figure 1, in which only the torsion bar and one of the extensions of the steering wheel are shown.
Figure 3: It shows a schematic detailed view of a section of the steering wheel of Figure 1, taken along a cutting plane perpendicular to a plane defined by the torsion bar of the steering wheel, in which the left side of the steering wheel is shown from said plane defined by the torsion bar of the steering wheel.
Figure 4: It shows a view analogous to that of Figure 3, in which the right side of the steering wheel is shown from said plane defined by the torsion bar of the steering wheel.
Figure 5: It shows a detailed view in which the end of one of the extensions of the steering wheel may be seen, provided with at least one actuator.

### DETAILED DESCRIPTION

As mentioned above, this invention refers to a vehicle steering wheel.

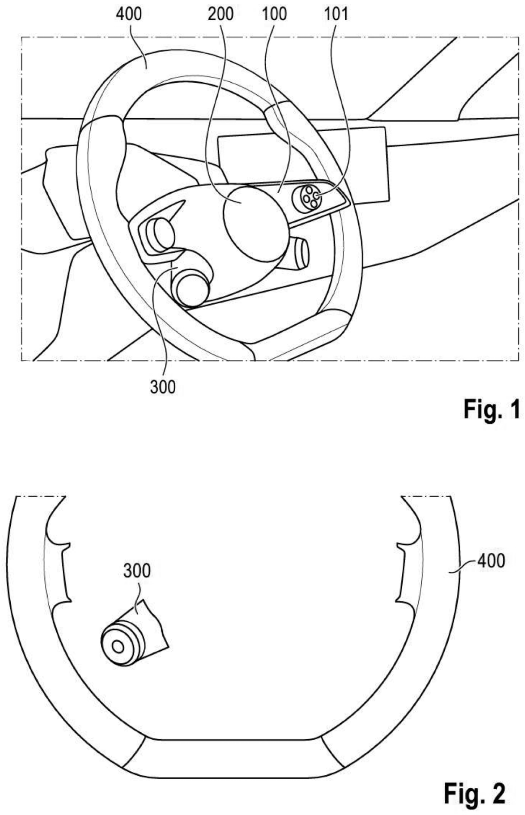

Figure 1 schematically shows a possible embodiment of the vehicle steering wheel, which is object of this invention, showing a steering wheel inside the cabin of a vehicle, in which the steering wheel is arranged in a straight-ahead driving position (forward).

As depicted in Figure 1, the steering wheel comprises a torsion bar (400) and spokes (100) that extend from a central area (200) of the steering wheel.

The central area (200) of the steering wheel is the portion through which the steering wheel is connected to the steering bar or steering column (not shown in the figures) of the vehicle, defining the steering wheel rotating shaft.

Controllers (or actuation buttons) (101) are shown, arranged along the spokes (100) of the steering wheel.

The vehicle steering wheel, which is the object of this invention, comprises extensions (300) that project from the central area (200) of the steering wheel toward the torsion bar (or grip bar of the steering wheel) (400).

The extensions (300) are located below the spokes (100) of the steering wheel, projecting from the central area (200) toward the torsion bar (400). As noted, these extensions (300) extend at an angle relative to the steering wheel rotating shaft, from a front portion of the central area (200) toward a rear portion of the steering wheel, in such a way that when the vehicle steering wheel is in a straight-ahead driving position (forward), the extensions (300) project from the central area (200) of the steering wheel toward the torsion bar (400), and from the front portion toward the driver area, according to the forward direction of the vehicle.

Figure 2 schematically shows one of the extensions (300) of the steering wheel directed from the center of the steering wheel toward the torsion bar (400) of the steering wheel. In Figure 2, all other portions of the steering wheel have been omitted, except for the torsion bar (400) and one of the extensions (300) corresponding to the left side of the steering wheel. It can be seen that the actuation surface of the extension (300) is positioned close to the torsion bar, below the central area (200), thus remaining accessible to the driver's thumb.

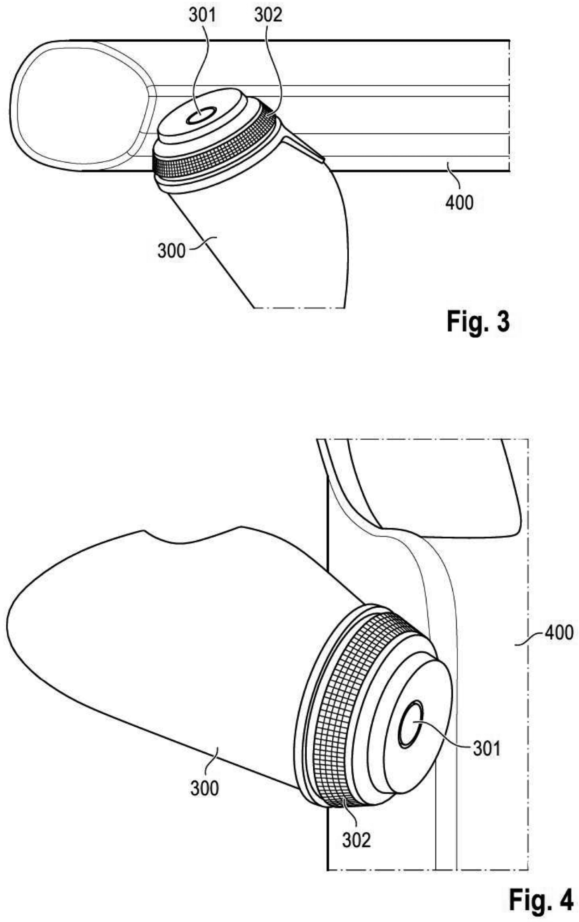

Figure 3 shows a cross-section of the steering wheel, taken along a cutting plane perpendicular to a plane defined by the torsion bar (400) of the steering wheel. In Figure 3, the left side of the steering wheel is shown, viewed from a plane defined by the torsion bar (400). The cylindrical geometry of the circular base of the extension (300) can be seen, with its cross-section decreasing from the front portion, i.e., the portion connected to the central area (200) of the steering wheel, to the rear portion, i.e., the portion where the actuator (301, 302) is located.

In Figure 3, the torsion bar (or grip bar of the steering wheel) (400) and one of the extensions (300) are shown.

As noted, according to the embodiment of the steering wheel shown in Figure 3, the extensions (300) project toward the rear portion of the vehicle, beyond an outer enveloping plane parallel to a plane defined by the central shaft of the torsion bar (400) of the steering wheel. Thus, the actuation surface is positioned close to the plane defined by the rearmost surface or the surface closest to the driver's seat of the torsion bar (400), approaching the thumb's reach or actuation area. It may also be noted that the actuation surface is angled. Specifically, the plane defined by the actuation surface is oriented downward and toward the outside of the steering wheel (i.e., opposite to the central area (200)).

In Figure 3, one of the extensions (300) of the steering wheel is shown, located along the left side of the steering wheel, viewed from below.

In Figure 4, another of the extensions (300) of the steering wheel is shown, located along the right side of the steering wheel. In this view, it may be noted that the actuator (301, 302) is positioned really close to the plane defined by the surface of the torsion bar (400) closest to the driver's seat, but without contacting or exceeding it, thus avoiding unintended contact during handling or steering.

In both Figure 3 and Figure 4, all other portions of the steering wheel have been omitted, except for the torsion bar (400) and one of the extensions (300), corresponding to the left and right sides of the steering wheel, respectively.

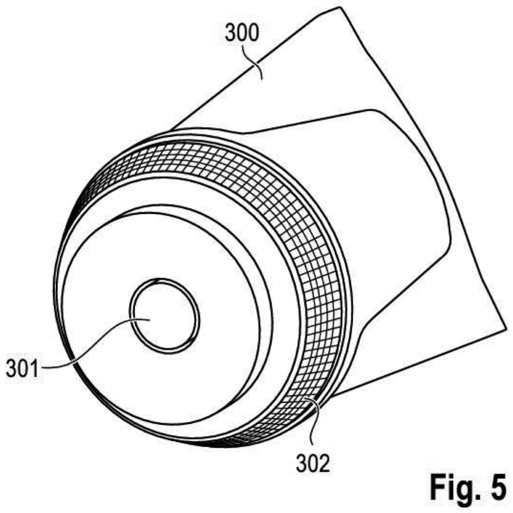

Figure 5 shows in detail the end of one of the extensions (300) of the steering wheel, in which a first actuator (301) is shown in the form of a button, and a second actuator (302), in the form of a peripheral wheel (for fine or progressive control of certain vehicle functionalities).

## Claims

1. Vehicle steering wheel comprising a torsion bar (400) set up for gripping the steering wheel by the driver of a vehicle, wherein the steering wheel comprises at least one spoke (100) connecting the torsion bar (400) with a central area (200) positioned in correspondence with a steering wheel's rotating shaft, wherein the steering wheel comprises at least one actuator (301, 302) set up to control at least one specific functionality of the vehicle, the steering wheel being **characterized in that** it comprises at least one extension (300) directly connected to the central area (200), wherein said at least one extension (300) projects from a front portion of said central area (200) of the steering wheel toward the torsion bar (400) and toward the driver's seat of the vehicle, and wherein the at least one actuator (301, 302) is arranged at a first end of the extension (300) opposite the end connected to the central area (200) of the steering wheel, such that the at least one actuator (301, 302) may be operated by a thumb while the driver maintains the grip on the steering wheel by the torsion bar (400).

2. Vehicle steering wheel according to Claim 1, **characterized in that** the at least one extension (300) is arranged in such a way that its first end is located close to the plane defined by the surface of the torsion bar (400) closest to the driver's seat.

3. Vehicle steering wheel according to Claim 2, **characterized in that** the first end is located at a distance between 30 and 10 mm from the plane defined by the surface of the torsion bar (400) closest to the driver's seat.

4. Vehicle steering wheel according to Claim 1, **characterized in that** the at least one extension (300) is arranged in such a way that its first end contacts the plane defined by the surface of the torsion bar (400) closest to the driver's seat.

5. Vehicle steering wheel according to any of the preceding claims, **characterized in that** the first end of the at least one extension (300) comprises an actuation surface angled relative to the plane defined by the rear surface of the torsion bar (400) and oriented toward the outside of the steering wheel.

6. Vehicle steering wheel according to Claim 5, **characterized in that** a shaft perpendicular to the actuation surface is angled between 15° and 45° regarding a shaft perpendicular to the plane defined by the rear surface of the torsion bar (400).

7. Vehicle steering wheel according to any of the preceding claims, **characterized in that** the at least one extension (300) has a circular cylindrical geometry.

8. Vehicle steering wheel according to any of the preceding claims, **characterized in that** the at least one extension (300) is arranged below the central area (200).

9. Vehicle steering wheel according to any of the preceding claims, **characterized in that** the at least one extension (300) comprises at least a first actuator (301) in the form of a button, operable in a direction substantially perpendicular to the projection direction of the at least one extension (300).

10. Vehicle steering wheel according to any of the preceding claims, **characterized in that** the at least one extension (300) comprises at least a second actuator (302) in the form of a peripheral wheel, actuated by rotation according to a rotating shaft parallel to the projection direction of the at least one extension (300).

11. Vehicle steering wheel according to any of the preceding claims, **characterized in that** it comprises at least two extensions (300), wherein a first extension (300) projects from the front portion of the central area (200) of the steering wheel toward the rear left area of the steering wheel, and a second extension (300) projects from the front portion of the central area (200) of the steering wheel toward the rear right area of the steering wheel.

12. Vehicle steering wheel according to Claim 11, when dependent on any of Claims 5 or 6, **characterized in that** the actuation surface of the first extension (300) is arranged at an opposite angle relative to the actuation surface of the second extension (300).
